# EUROPEAN PATENT APPLICATION

(11) **EP 3 505 737 A1**
(43) Date of publication of application: **03.07.2019**
(21) Application number: 16918982.6
(22) Date of filing: 11.10.2016
(51) Int. Cl.: F02B 37/12, F02B 39/00

(54) **INTAKE PASSAGE STRUCTURE FOR TURBOCHARGER-EQUIPPED ENGINE**

(71) Applicant: Mazda Motor Corporation, Aki-gun Hiroshima 730-8670 (JP)
(72) Inventor: UEHANE, Yoshiyuki, Hiroshima 730-8670 (JP); OHTSUKI, Ken, Hiroshima 730-8670 (JP); SUEKUNI, Einosuke, Hiroshima 730-8670 (JP); ISHIDA, Kimio, Hiroshima 730-8670 (JP); HOSOKAWA, Hiroshi, Hiroshima 730-8670 (JP); WATANABE, Junji, Hiroshima 730-8670 (JP)
(74) Representative: Müller-Boré & Partner Patentanwälte PartG mbB
(86) International application number: PCT/JP2016/080141
(87) International publication number: WO 2018/069975

(57) **Abstract**

An intake passage structure for a turbocharger-equipped engine (1) includes a supercharging passage (71) and an air relief passage (72) provided in a compressor case (21a). The air relief passage (72) has an air outflow port (72a) formed through an inner wall surface of an upstream portion (71a) of the supercharging passage (71) upstream of the compressor (21). A projecting member (91) projecting radially inward of a specific portion (90) is provided on a portion of an inner wall surface of the specific portion (90) in a circumferential direction of the inner wall surface. The specific portion (90) ranges from a downstream portion of an upstream intake passage (32) to a portion of the supercharging passage (71) upstream of the air outflow port (72a).

## Description

### TECHNICAL FIELD

The present invention relates to an intake passage structure for a turbocharger-equipped engine.

### BACKGROUND ART

As disclosed in Patent Document 1, for example, an intake passage including a compressor of a turbocharger is provided with an air relief passage (in Patent Document 1, referred to as a "bypass passage") through which a portion of intake air supercharged by the compressor is returned to a portion of the intake passage upstream of the compressor. In addition, in Patent Document 1, the air relief passage includes a control valve for adjusting the amount of the intake air returning through the air relief passage. In Patent Document 1, the air relief passage serves to avoid surging of the compressor.

### CITATION LIST

### PATENT DOCUMENT

[Patent Document 1] Japanese Unexamined Patent Publication No. 2016-11648

### SUMMARY OF THE INVENTION

### TECHNICAL PROBLEM

In general, a throttle valve is disposed in a portion of the intake passage downstream of the compressor. If, while the intake air supercharged by the compressor is being supplied to an intake port of the engine (in turn, a cylinder) with the throttle valve opened, the throttle valve suddenly shifts to a fully closed position or to a position close to the fully closed position, the pressure in a portion of the intake passage between the compressor and the throttle valve may excessively increase, resulting in breakage of the compressor.

To address this problem, as disclosed in Patent Document 1, an air relief passage through which a portion of intake air supercharged by a compressor is returned to an upstream portion of the intake passage upstream of the compressor is provided, and includes a relief valve. When the pressure in the portion of the intake passage between the compressor and the throttle valve has increased, opening the relief valve allows a portion of the intake air supercharged by the compressor to return to the upstream portion of the intake passage upstream of the compressor through the air relief passage. This can prevent the pressure in the portion of the intake passage between the compressor and the throttle valve from excessively increasing.

However, if the air relief passage is bent due to space limitations and other reasons, the intake air that has flowed through the air relief passage to the upstream portion of the intake passage upstream of the compressor flows back through the upstream portion toward an air inlet of the intake passage while swirling along the inner wall surface of the upstream portion. The upstream portion (upstream intake passage) is usually configured as a tube, which vibrates due to a swirl flow therein to emit sound radiation from the surface of the tube.

To prevent such sound radiation, a sound insulating material or a damping material may be attached to the surface of the tube. However, such a method makes it difficult to effectively reduce the sound radiation to a sufficient degree. Thus, such a method is susceptible to improvement.

In view of the foregoing background, it is therefore an object of the present invention to provide a turbocharger-equipped-engine intake passage structure capable of reducing sound radiation emitted from the surface of a tube forming an upstream intake passage.

### SOLUTION TO THE PROBLEM

To achieve the object, the present invention provides an intake passage structure for a turbocharger-equipped engine. The intake passage structure includes: a compressor of the turbocharger housed in a compressor case; an upstream intake passage supplying intake air into the compressor case; a downstream intake passage supplying the intake air supplied into the compressor case and supercharged by the compressor to an intake port of the engine; and a throttle valve disposed in the downstream intake passage. A supercharging passage and an air relief passage are provided in the compressor case, the supercharging passage including the compressor and connecting the upstream intake passage and the downstream intake passage together, the air relief passage connecting an upstream portion of the supercharging passage upstream of the compressor and a downstream portion of the supercharging passage downstream of the compressor together without passing through the compressor, and returning a portion of the intake air supercharged by the compressor to the upstream portion of the supercharging passage upstream of the compressor. The air relief passage has an air outflow port formed through an inner wall surface of the upstream portion of the supercharging passage upstream of the compressor. At least one projecting member is provided on a portion of an inner wall surface of a specific portion in a circumferential direction of the inner wall surface, the at least one projecting member projecting radially inward of the specific portion, the specific portion ranging from a downstream portion of the upstream intake passage to a portion of the supercharging passage upstream of the air outflow port.

According to the above configuration, a swirl flow that tends to swirl along the inner wall surface of the upstream portion of the supercharging passage upstream of the compressor and the inner wall surface of the upstream intake passage collides with the projecting member. The collision with the projecting member reduces the velocity of the swirl flow. Thus, sound radiation from the surface of a tube forming the upstream intake passage can be reduced without attaching a sound insulating material or a damping material to the surface of the tube.

In a preferred embodiment, in the intake passage structure, the specific portion is a portion of the supercharging passage upstream of, and near, the air outflow port, or a portion of the upstream intake passage near a downstream end of the upstream intake passage.

This can cause the swirl flow to collide with the projecting member at an early stage, and as a result, the sound radiation can be more effectively reduced. In addition, when the specific portion is located near the downstream end of the upstream intake passage, the projecting member can be easily provided on the inner wall surface of the specific portion. In other words, to facilitate an operation for connecting the upstream intake passage to the inlet of the compressor case, a portion of the upstream intake passage near the downstream end thereof may be defined by a member different from that of the other portion. If the projecting member is provided on such a different member, the projecting member can be easily provided on the inner wall surface of the specific portion.

In a preferred embodiment, in the intake passage structure, the at least one projecting member is in a shape of a flat plate having two flat surfaces facing each other in a thickness direction of the projecting member, and a virtual central plane passing midway between the two flat surfaces of the at least one projecting member extends in a passage length direction of the specific portion and in a radial direction of the specific portion.

Thus, when no intake air flows through the air relief passage (when the air relief passage does not return the intake air to the upstream portion of the supercharging passage upstream of the compressor), the projection member does not hinder the flow of the intake air passing through the specific portion toward the compressor. This can reduce the intake resistance increased by the projecting member. On the other hand, the swirl flow colliding substantially perpendicularly with one of the two flat surfaces can effectively reduce the velocity of the swirl flow.

In a preferred embodiment, in the intake passage structure, the at least one projecting member includes a plurality of projecting members respectively provided at a plurality of portions of the inner wall surface of the specific portion in the circumferential direction of the inner wall surface, and the plurality of projecting members are in substantially the same position in the passage length direction of the specific portion.

In this way, the projecting members can further reduce the velocity of the swirl flow. As a result, the sound radiation can be more effectively reduced.

In a preferred embodiment, in the intake passage structure, a projection amount of the at least one projecting member is smaller than half an inner diameter of a passage in the specific portion.

Thus, no projecting member is present in the central portion of the specific portion. This can prevent the projecting member from hindering the flow of intake air passing through the specific portion toward the compressor to the extent possible when no intake air flows through the air relief passage. On the other hand, since the swirl flow tends to swirl along the inner wall surface of the upstream portion and the inner wall surface of the upstream intake passage, the projecting member can reduce the velocity of the swirl flow.

### ADVANTAGES OF THE INVENTION

As described above, the intake passage structure for a turbocharger-equipped engine according to the present invention can reduce sound radiation from a surface of a tube forming an upstream intake passage without attaching a sound insulating material or a damping material to the surface of the tube.

### BRIEF DESCRIPTION OF THE DRAWINGS

FIG. 1 illustrates a schematic configuration of a turbocharger-equipped engine having an intake passage structure according to an exemplary embodiment.
FIG. 2 is a perspective view showing an intake passage for the turbocharger-equipped engine.
FIG. 3 is a perspective cross-sectional view showing a compressor case and a portion of the inside thereof.
FIG 4 is a cross-sectional view showing a connection passage and a relief valve.
FIG. 5 is a cross-sectional view of a portion of the compressor case defining an air relief passage, taken along the vertical direction.
FIG. 6 is a perspective view showing a state in which a drive unit is attached to a drive unit attachment portion of the compressor case.
FIG. 7 shows how intake air passing through the air relief passage flows.
FIG. 8 is a perspective view showing projecting members provided in a specific portion (a portion of an upstream intake passage near a downstream end thereof).
FIG 9 is a view of the specific portion and the projecting members as viewed from a passage length direction of the specific portion.
FIG. 10 is a perspective view showing projecting members according to a first variation.
FIG. 11 is a perspective view showing projecting members according to a second variation.
FIG. 12 is a graph showing the relation between a distance from an air outflow port in a passage length direction and a maximum velocity of a swirl flow in each of a situation where a specific portion (a portion of an upstream intake passage near a downstream end thereof) includes two projecting members, a situation where the specific portion includes four projecting members, a situation where the specific portion includes eight projecting members, and a situation where the specific portion includes no projecting member.

### DESCRIPTION OF EMBODIMENTS

Exemplary embodiments will now be described in detail with reference to the drawings.

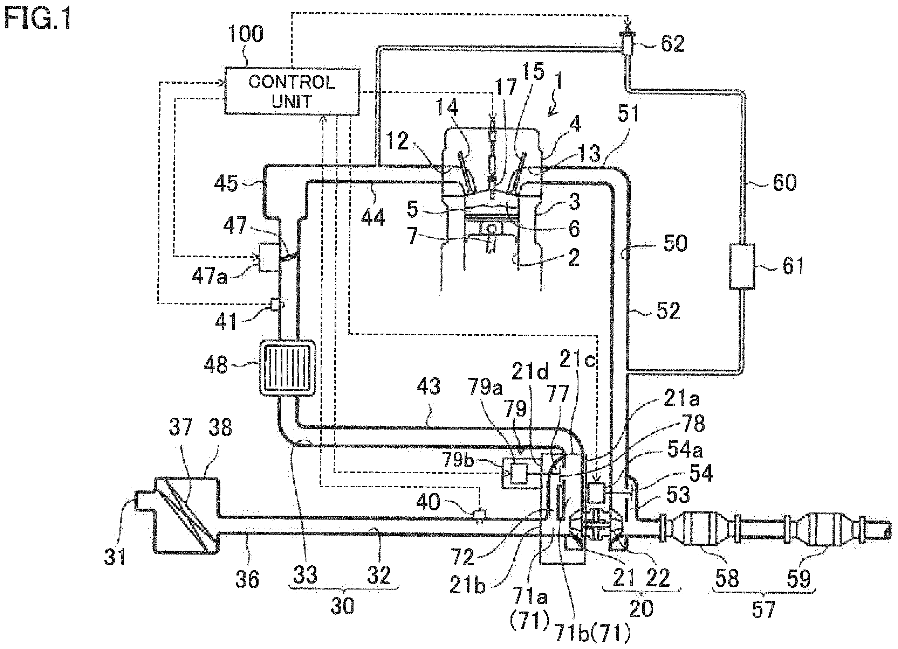

FIG. 1 illustrates a schematic configuration of a turbocharger-equipped engine 1 (hereinafter simply referred to as an "engine 1") having an intake passage structure according to an exemplary embodiment. The engine 1 is a gasoline engine mounted in an engine compartment located at a front portion of a vehicle, and includes a cylinder block 3 provided with a plurality of (four in this embodiment) cylinders 2 (only one of which is shown in FIG. 1) arranged in a row, and a cylinder head 4 disposed on the cylinder block 3. A piston 5 for defining a combustion chamber 6 between the cylinder head 4 and the piston 5 is reciprocably inserted into, and run through, each of the cylinders 2 of the engine 1. The piston 5 is connected to a crankshaft (not shown) via a connecting rod 7. The crankshaft extends along the row of the cylinders 2 (a direction perpendicular to the paper of FIG 1).

The cylinder head 4 has an intake port 12 and an exhaust port 13 for each of the cylinders 2, and includes intake valves 14 and exhaust valves 15. The intake valves 14 each open and close an opening of the associated intake port 12 near the combustion chamber 6. The exhaust valves 15 each open and close an opening of the associated exhaust port 13 near the combustion chamber 6. The intake valves 14 are driven by an intake valve driving mechanism (not shown), and the exhaust valves 15 are driven by an exhaust valve driving mechanism (not shown). The intake valves 14 and the exhaust valves 15 each reciprocate at a predetermined timing through an associated one of the intake valve driving mechanism and the exhaust valve driving mechanism to open and close an associated one of the intake ports 12 and the exhaust ports 13, thereby exchanging gas in the associated cylinder 2. The intake valve drive mechanism and the exhaust valve drive mechanism respectively include an intake camshaft and an exhaust camshaft which are drivably coupled to the crankshaft. These camshafts rotate in synchronization with rotation of the crankshaft. At least the intake valve driving mechanism includes a hydraulic or mechanical phase control mechanism capable of continuously changing the phase of the intake camshaft within a predetermined angle range.

An injector (not shown) for injecting fuel is provided in a portion of the cylinder head 4 above the combustion chamber 6 of each cylinder 2. This injector has a fuel injection port formed through the ceiling surface of the combustion chamber 6 to face the combustion chamber 6, and supplies the fuel directly to the combustion chamber 6 in the vicinity of the top dead center of a compression stroke.

Further, a spark plug 17 is disposed in a portion of the cylinder head 4 above the combustion chamber 6 of each cylinder 2. The spark plug 17 has a tip portion (electrode) exposed near a portion of the ceiling of the combustion chamber 6 located on a side of the fuel injection port of the injector. Then, the spark plug 17 is designed to generate a spark at a desired ignition timing.

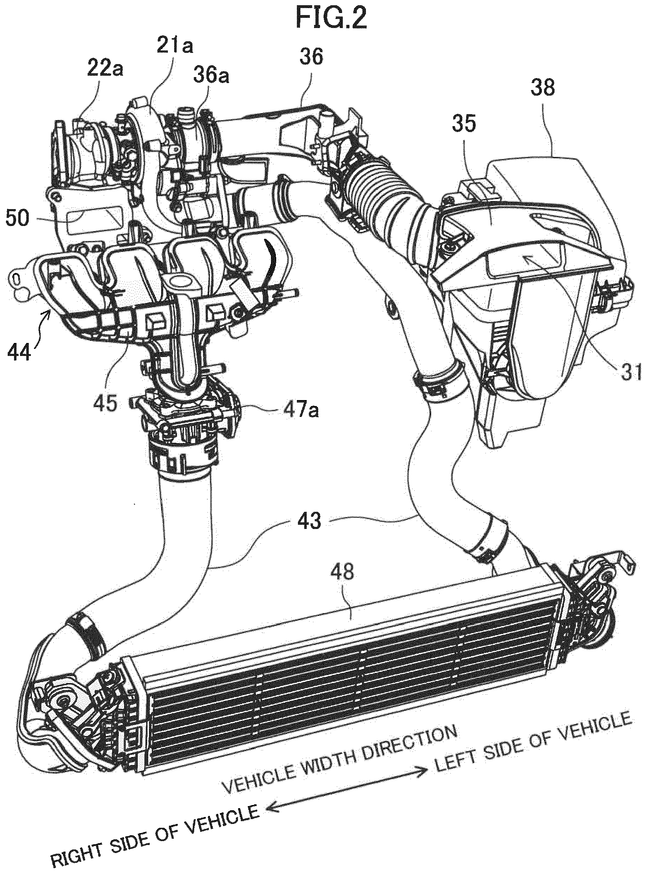

An intake passage 30 is connected to one surface of the cylinder head 4 in the width direction of the cylinder head 4 (a direction perpendicular to the row of the cylinders 2), i.e., a left surface thereof in FIG. 1, to communicate with the intake port 12 of each cylinder 2. An exhaust passage 50 is connected to the other surface of the cylinder head 4 in the width direction of the cylinder head 4, i.e., a right surface thereof in FIG. 1, to discharge exhaust gas from the combustion chamber 6 of each cylinder 2. A compressor 21 of the turbocharger 20 is disposed in the intake passage 30. The compressor 21 is housed in a compressor case 21a (a specific shape of which is shown in FIGS. 2, 3, 5, and 6). A turbine 22 of the turbocharger 20 is disposed in the exhaust passage 50. The turbine 22 is housed in a turbine case 22a (see FIG. 2). The turbine 22 rotates in response to an exhaust gas flow. The rotation of the turbine 22 causes the compressor 21 coupled to the turbine 22 to operate. The operation of the compressor 21 triggers supercharging of the intake air sucked into the intake passage 30 through an air inlet 31 located at an upstream end of the intake passage 30.

The intake passage 30 includes an upstream intake passage 32 through which intake air sucked into the intake passage 30 from the air inlet 31 is supplied into the compressor case 21a, and a downstream intake passage 33 through which the intake air supplied into the compressor case 21a and supercharged by the compressor 21 is supplied to the intake port 12 of the engine 1.

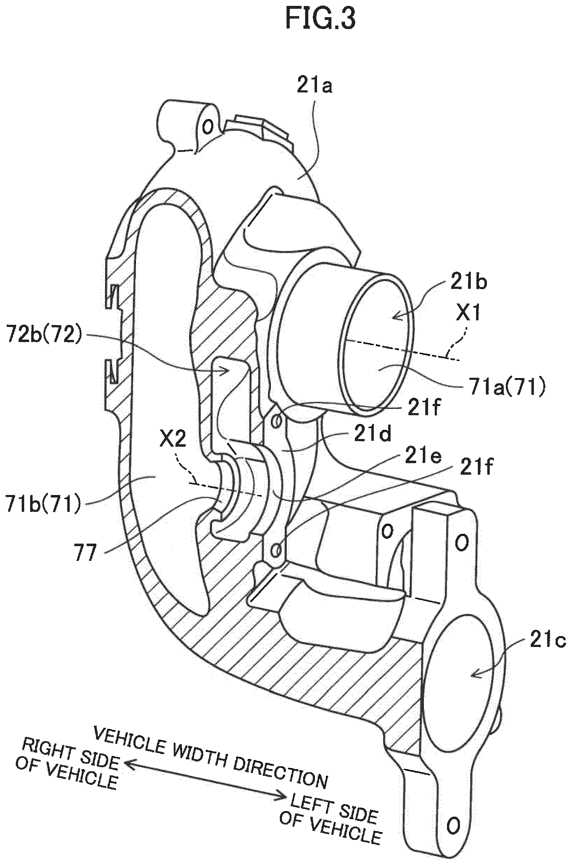

As shown in FIG. 2, an upstream end of the upstream intake passage 32 is connected to an inlet forming member 35 having the air inlet 31, and a downstream end of the upstream intake passage 32 is connected to an inlet 21b (see FIG. 3) of the compressor case 21a. The upstream intake passage 32 is defined by an upstream intake pipe 36. An air cleaner 37 for filtering the intake air is disposed in the vicinity of the upstream end of the upstream intake passage 32 (the upstream intake pipe 36). The air cleaner 37 is housed in a cleaner box 38. A first pressure sensor 40 for detecting the pressure in the upstream intake passage 32 is disposed on a portion of the upstream intake passage 32 between the cleaner box 38 and the compressor case 21a.

An upstream end of the downstream intake passage 33 is connected to an outlet 21c (see FIG. 3) of the compressor case 21a, and a downstream end of the downstream intake passage 33 is connected to the intake port 12. The downstream intake passage 33 is defined by a downstream intake pipe 43 and an intake manifold 44 (see FIG. 2). The intake manifold 44 includes independent passages respectively corresponding to the cylinders 2. A downstream end of each of the independent passages is connected to the intake port 12 of an associated one of the cylinders 2. An upstream end of the downstream intake pipe 43 is connected to the outlet 21c of the compressor case 21a, and a downstream end of the downstream intake pipe 43 is connected to the intake manifold 44 through a surge tank 45. The surge tank 45 is integrated with the intake manifold 44.

A throttle valve 47 is disposed in the downstream intake passage 33 (downstream intake pipe 43). The throttle valve 47 is driven by a throttle actuator 47a, such as a stepping motor, to change the cross-sectional area of a portion of the downstream intake passage 33 where the throttle valve 47 is disposed, thereby adjusting the amount of intake air sucked into the combustion chamber 6 of each cylinder 2.

An intercooler 48 is disposed on a portion of the downstream intake passage 33 between the throttle valve 47 and the compressor case 21a to cool the air that has been supercharged (compressed) by the compressor 21. Further, a second pressure sensor 41 is disposed on a portion of the downstream intake passage 33 between the throttle valve 47 and the intercooler 48 to detect the pressure of the intake air supercharged by the compressor 21. The second pressure sensor 41 also functions to detect the pressure in a portion of the downstream intake passage 33 between the compressor case 21a and the throttle valve 47. To perform this function, the second pressure sensor 41 may be disposed on a portion of the downstream intake passage 33 between the compressor case 21a and the intercooler 48.

The exhaust passage 50 is defined by an exhaust manifold 51 and an exhaust pipe 52. The exhaust manifold 51 forms a portion of the exhaust passage 50 near an upstream end thereof, and has independent passages branched off for the respective cylinders 2 and connected to the respective exhaust ports 13, and a collecting portion in which the independent passages collect. The exhaust pipe 52 is connected to a downstream end of the collecting portion.

The exhaust passage 50 (a portion of the exhaust passage 50 configured as the exhaust pipe 52) is provided with an exhaust bypass passage 53 for allowing exhaust gas of the engine 1 to flow without passing through the turbine 22. In other words, an upstream end of the exhaust bypass passage 53 is connected to a portion of the exhaust passage 50 upstream of the turbine 22, and a downstream end of the exhaust bypass passage 53 is connected to a portion of the exhaust passage 50 downstream of the turbine 22.

A wastegate valve 54 driven by a drive motor 54a is provided at the upstream end of the exhaust bypass passage 53. The opening degree of the wastegate valve 54 is continuously variable from 0% (a fully closed position) to 100%. When the opening degree of the wastegate valve 54 is 0%, a total amount of the exhaust gas flows into the turbine 22. When the opening degree is other than 0%, the flow rate of the exhaust gas flowing through the exhaust bypass passage 53 (i.e., the flow rate of the gas flowing into the turbine 22) varies according to the opening degree. In other words, as the opening degree of the wastegate valve 54 increases, the flow rate of the exhaust gas flowing into the exhaust bypass passage 53 increases, and the flow rate of the exhaust gas flowing into the turbine 22 decreases.

An exhaust gas purifier 57 is disposed at a portion of the exhaust passage 50 downstream of the turbine 22 (downstream of a portion of the exhaust passage 50 connected to the downstream end of the exhaust bypass passage 53) to purify harmful components in the exhaust gas. The exhaust gas purifier 57 includes an oxidation catalyst 58 that supports platinum, a mixture of platinum and palladium, or any other component to oxidize CO and HC in the exhaust gas, and a lean NOx catalyst 59 that processes (traps) NOx in the exhaust gas and prevents the NOx from being discharged into the atmosphere. The lean NOx catalyst 59 is disposed downstream of, and away from, the oxidation catalyst 58.

The engine 1 has an EGR passage 60 so that a portion of the exhaust gas is returned from the exhaust passage 50 to the intake passage 30. The EGR passage 60 connects a portion of the exhaust passage 50 between the exhaust manifold 51 and the turbine 22 to the independent passages of the intake manifold 44. The EGR passage 60 includes an EGR cooler 61 for cooling the exhaust gas passing through the EGR passage 60, and an EGR valve 62 for changing the cross-sectional area of the EGR passage 60. The EGR valve 62 adjusts the amount of the exhaust gas returning through the EGR passage 60.

The compressor case 21a includes a supercharging passage 71 and an air relief passage 72. The supercharging passage 71 includes the compressor 21, and connects the upstream intake passage 32 and the downstream intake passage 33 together. The air relief passage 72 connects an upstream portion 71a of the supercharging passage 71 upstream of the compressor 21 and a downstream portion 71b of the supercharging passage 71 downstream of the compressor 21 together without passing through the compressor 21, and is used to return a portion of the intake air supercharged by the compressor 21 to the upstream portion 71a. The air relief passage 72 is provided to prevent the pressure in the downstream portion 71b of the supercharging passage 71 downstream of the compressor 21 and the pressure in the portion of the downstream intake passage 33 between the compressor case 21a and the throttle valve 47 from excessively increasing when the throttle valve 47 suddenly shifts from an open position to a fully closed position or a position close to the fully closed position.

An upstream end of the air relief passage 72 is connected to the downstream portion 71b of the supercharging passage 71 downstream of the compressor 21 through a connection passage 77 provided in the compressor case 21a. A downstream end of the air relief passage 72 is connected directly to the upstream portion 71a of the supercharging passage 71 upstream of the compressor 21.

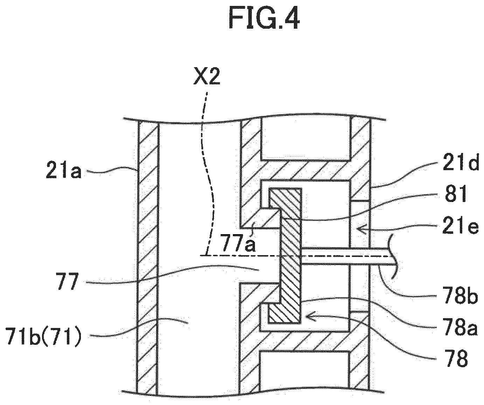

The connection passage 77 is provided with a relief valve 78 that is placed in a fully opened position or a fully closed position. The relief valve 78 is driven by a drive source 79a, such as a solenoid or a motor, of a drive unit 79, and is fully opened or fully closed. The drive unit 79 is attached to a drive unit attachment portion 21d (see FIGS. 1, 3, 4, and 6) of the surface of the compressor case 21a. When the relief valve 78 is fully opened, the connection passage 77 (that is, the air relief passage 72) communicates with the downstream portion 71b, and a portion of the intake air supercharged by the compressor 21 is returned to the upstream portion 71a. On the other hand, when the relief valve 78 is fully closed, the connection passage 77 (that is, the air relief passage 72) does not communicate with the downstream portion 71b, and the intake air supercharged by the compressor 21 is not returned to the upstream portion 71a. FIG. 3 does not show the relief valve 78, and FIG 4 schematically shows the configuration of the relief valve 78. The configuration of the relief valve 78 will be described later.

A control unit 100 controls the throttle valve 47 (specifically, the throttle actuator 47a), the relief valve (specifically, the drive source 79a of the drive unit 79), the wastegate valve 54 (specifically, the drive motor 54a), the EGR valve 62, the injector, the spark plug 17, and the phase control mechanism. The control unit 100 is a controller based on a well-known microcomputer, and includes a central processing unit (CPU) for executing a program, a memory configured as, for example, a RAM and a ROM and storing programs and data, and an input/output (I/O) bus through which an electric signal is transferred.

The control unit 100 receives signals from various sensors required to control the engine 1. The various sensors include the first and second pressure sensors 40 and 41. Examples of the various sensors required to control the engine 1 include known sensors, such as an accelerator position sensor for detecting the accelerator position, and an air flow sensor for detecting the flow rate of the intake air sucked into the intake passage 30, in addition to the first and second pressure sensors 40 and 41. Such various sensors are not shown in the drawings. The control unit 100 controls the throttle valve 47, the relief valve 78, the wastegate valve 54, the EGR valve 62, the injector, the spark plug 17, and the phase control mechanism (i.e., controls the engine 1), based on the received signals.

When a pressure difference, which is a value obtained by subtracting the pressure detected by the first pressure sensor 40 (substantially the same value as atmospheric pressure) from the pressure detected by the second pressure sensor 41, is equal to or lower than a predetermined pressure, the control unit 100 fully closes the relief valve 78. The predetermined pressure is slightly greater than a maximum value of the pressure of the intake air supercharged by the compressor 21.

On the other hand, when the pressure difference is greater than the predetermined pressure, the control unit 100 fully opens the relief valve 78. Specifically, when the throttle valve 47 suddenly shifts from an open position to the fully closed position or the position close to the fully closed position, the pressure in the downstream portion 71b and the pressure in the portion of the downstream intake passage 33 between the compressor case 21a and the throttle valve 47 increase, and thus, the pressure difference becomes greater than the predetermined pressure. If the pressure in the downstream portion 71b and the pressure in the portion of the downstream intake passage 33 between the compressor case 21a and the throttle valve 47 excessively increase, the compressor 21 may be broken. Thus, when the pressure difference is greater than the predetermined pressure, the relief valve 78 is fully opened.

The relief valve 78 fully opened as described above allows a portion of the intake air supercharged by the compressor 21 to return to the upstream portion 71a through the air relief passage 72. Then, the returned intake air flows back through the upstream intake passage 32 toward the air inlet 31 (an upstream end of the upstream intake passage 32).

As shown in FIGS. 2 and 3, the upstream portion 71a of the supercharging passage 71 upstream of the compressor 21 and a downstream portion of the upstream intake passage 32 extend linearly in the vehicle width direction. The downstream portion of the upstream intake passage 32 is connected to an upstream portion of the upstream intake passage 32 via a curved portion curved toward the upstream end of the upstream intake passage 32 and the front side of the vehicle. The upstream portion extends from the curved portion toward the front side of the vehicle.

The downstream portion 71b of the supercharging passage 71 downstream of the compressor 21 extends downward from a portion of the supercharging passage 71 where the compressor 21 is disposed, is then curved downward toward the left side of the vehicle (toward the right side of each of FIGS. 2 and 3), and is connected to the downstream intake passage 33 at the outlet 21c of the compressor case 21a. The downstream intake passage 33 extends from the outlet 21c of the compressor case 21a toward the left side of the vehicle through a position below the downstream portion of the upstream intake passage 32, and is then curved toward the downstream end of the downstream intake passage 33 and the front side of the vehicle. Further, the downstream intake passage 33 extends from the curved portion toward the front side of the vehicle through a position below the upstream portion of the upstream intake passage 32, then extends toward the front, lower, and left sides of the vehicle, and is connected to the intercooler 48 disposed near the front end of the vehicle.

A portion of the downstream intake passage 33 (downstream intake pipe 43) downstream of the intercooler 48 extends toward the rear, upper, and left sides of the vehicle, and then extends upward in the vertical direction. The throttle valve 47 is disposed in this upwardly extending portion.

As shown in FIG. 3, the connection passage 77 is connected to an upper portion of the downstream portion 71b. The central axis X2 of the connection passage 77 is parallel to the central axis X1 of the upstream portion 71a, and extends in the vehicle width direction.

As schematically shown in FIG. 4, a valve seat 81 on which a valve body 78a of the relief valve 78 is seated is provided on a wall portion 77a defining the connection passage 77. A valve drive shaft 78b extending in the vehicle width direction is connected to the valve body 78a on the central axis X2 of the connection passage 77. The valve drive shaft 78b is connected to the drive source 79a of the drive unit 79 attached to the drive unit attachment portion 21d through an opening 21e of a wall portion of the compressor case 21a (a wall portion having the drive unit attachment portion 21d). The drive source 79a moving the valve drive shaft 78b in the axial direction of the valve drive shaft 78b (in the vehicle width direction) brings the relief valve 78 into the fully opened position or the fully closed position. In other words, when the valve drive shaft 78b moves toward the left side of the vehicle (right side of FIG. 4), the relief valve 78 is fully opened. When the valve drive shaft 78b moves toward the right side of the vehicle (left side of FIG. 4), the relief valve 78 is fully closed. The opening 21e is closed by a unit case 79b, which will be described later.

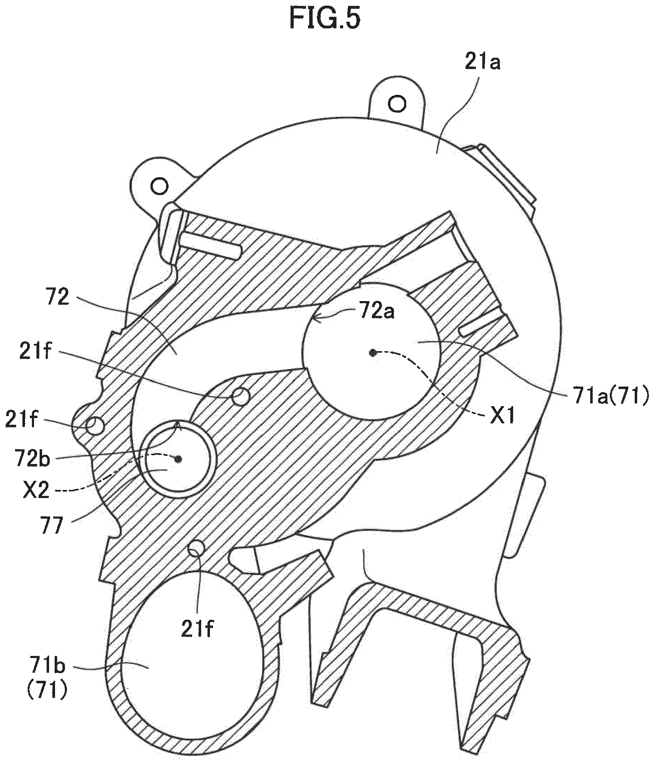

As shown in FIGS. 3 and 5, the air relief passage 72 is curved to protrude upward when viewed from a direction along the central axis of the upstream portion 71a (which is the vehicle width direction and a direction along the rotation axis of the compressor 21). The air relief passage 72 has an air outflow port 72a formed through an inner wall surface of the upstream portion 71a, and further has an air inflow port 72b formed through an inner wall surface of the connection passage 77.

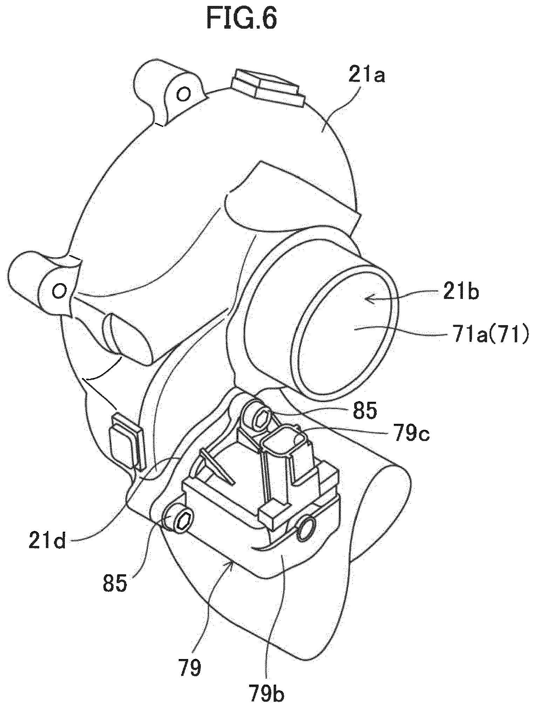

As shown in FIG. 6, the drive unit 79 includes a unit case 79b (simplified in FIG. 1) that houses the drive source 79a. The unit case 79b is mounted and fixed to the driving unit attachment portion 21d with three bolts 85 serving as fastening members, so that the drive unit 79 is attached to the drive unit attachment portion 21d. Only two of the three bolts 85 are visible in FIG. 6. The drive unit attachment portion 21d is provided at a portion of the surface of the compressor case 21a on the left side of the vehicle relative to the connection passage 77.

As shown in FIGS. 3 and 5, the drive unit attachment portion 21d has three screw holes 21f into which the three bolts 85 are respectively screwed. Only two of the three screw holes 21f are visible in FIG. 3. The three screw holes 21f of the drive unit attachment portion 21d are positioned on or adjacent to a circle centered around the central axis X2 of the connection passage 77, and are uniformly spaced apart in the circumferential direction of the circle.

An upper surface of the unit case 79b is provided with a connector receiver 79c into which a connector (not shown) provided at a tip end of a wire for supplying a current to the driving source 79a is inserted. An upper side of the connector receiver 79c is open, so that the connector is inserted into the connector receiver 79c from the upper side of the connector receiver 79c. Thus, the connector can be easily inserted into the connector receiver 79c from the upper side of the engine compartment.

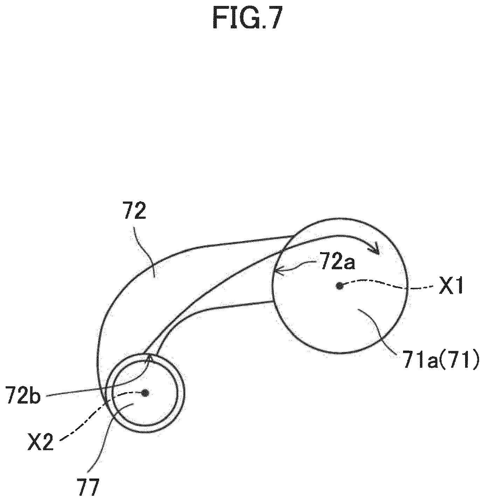

When the relief valve 78 is fully opened, a portion of the intake air supercharged by the compressor 21 is returned to the upstream portion 71a through the air relief passage 72. At this time, as indicated by the arrow in FIG. 7, the intake air passing through the air relief passage 72 tends to flow substantially straight without passing along the curved shape of the air relief passage 72. This causes the intake air to flow through the air outflow port 72a into the upstream portion 71a along the inner wall surface of the upstream portion 71a. Thus, the intake air that has flowed into the upstream portion 71a swirls along the inner wall surface of the upstream portion 71a as it is (i.e., swirls clockwise in FIG. 7). As a result, the intake air that has flowed into the upstream portion 71a flows back toward the air inlet 31 while swirling along the inner wall surface of the upstream portion 71a and the inner wall surface of the upstream intake passage 32. At this time, the upstream intake pipe 36 vibrates due to the swirling flow, thus emitting sound radiation from the surface of the upstream intake pipe 36 (in particular, the downstream portion of the upstream intake passage 36 and the curved portion).

Note that the swirling direction of the swirl flow is determined by the shape of the air relief passage 72. If the air relief passage 72 is curved to protrude downward as viewed from the direction along the central axial of the upstream portion 71a, for example, the flow swirls counterclockwise in FIG. 7. If the air relief passage 72 is in a non-linear shape, the swirl flow easily occurs. In particular, if the air relief passage 72 is formed in a non-linear shape as viewed from the direction along the central axis of the upstream portion 71a, the swirl flow more easily occurs.

To reduce such sound radiation, at least one projecting member 91 is provided on a portion of an inner wall surface of a specific portion 90 in the circumferential direction of the inner wall surface. The specific portion 90 ranges from the downstream portion of the upstream intake passage 32 to a portion of the supercharging passage 71 upstream of the air outflow port 72a. The at least one projecting member projects radially inward of the specific portion 90.

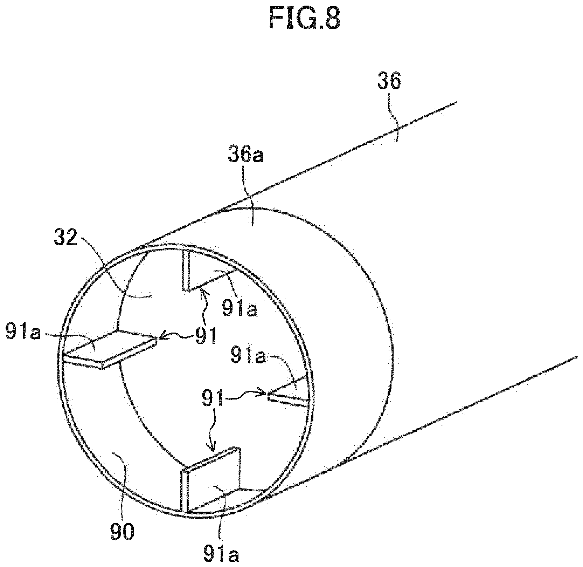

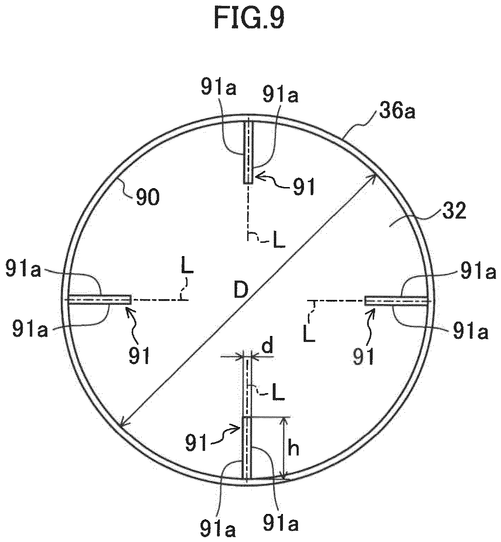

In this embodiment, as shown in FIGS. 8 and 9, a plurality of (four) projecting members 91 are provided at a plurality of different portions of the inner wall surface of the specific portion 90 in the circumferential direction of the inner wall surface (four different portions spaced apart in the circumferential direction of the inner wall surface of the specific portion 90 in FIGS. 8 and 9). The projecting members 91 are in substantially the same position in a direction along the passage length direction of the specific portion 90. Note that the projecting members 91 do not have to overlap with one another on the specific portion 90 in the passage length direction of the specific portion 90. In this case, however, the projecting members 91 preferably overlap with one another in the passage length direction. In addition, portions of the inner wall surface of the specific portion 90 on which the projecting members 91 are respectively provided do not have to be uniformly spaced apart in the circumferential direction of the inner wall surface.

The specific portion 90 is preferably a portion of the supercharging passage 72 upstream of, and near, the air outflow port 72a, or a portion of the upstream intake passage 32 near the downstream end of the upstream intake passage 32. In this embodiment, the specific portion 90 is the portion of the upstream intake passage 32 near the downstream end of the upstream intake passage 32. To facilitate an operation for connecting the upstream intake passage 32 (upstream intake pipe 36) to the inlet 21b of the compressor case 21a, the portion of the upstream intake passage 32 near the downstream end thereof is defined by a member (a connection pipe 36a shown in FIGS. 2 and 8) different from that of the other portion. It is easy to provide the projecting members 91 on an inner wall surface of the connection pipe 36a as the different member.

As shown in FIGS. 8 and 9, each of the projecting members 91 is in the shape of a flat plate having two flat surfaces 91a facing each other in the thickness direction. A virtual central plane (indicated by the one-dot-chain straight line L in FIG. 9) passing midway between the two flat surfaces 91a of each projecting member 91 extends in the passage length direction of the specific portion 90 (i.e., in the direction along the central axis of the connection pipe 36a), and in the radial direction of the specific portion 90 (i.e., in the radial direction of the connection pipe 36a). In FIG. 9, the virtual central plane (straight line L) in each of the projecting members 91 passes through the center of the specific portion 90. The swirl flow passing along the inner wall surface of the specific portion 90 collides substantially perpendicularly with one of the two flat surfaces 91a. This can effectively reduce the velocity of the swirl flow.

Further, the projection amount h of each projecting member 91 is smaller than half the inner diameter D of a passage in the specific portion 90 (the inner diameter of the connection pipe 36a). In other words, a central portion of the specific portion 90 has no projection member 91. This ensures a space through which the intake air flows through the specific portion 90 toward the compressor 21 when the relief valve 78 is in the fully closed position. Thus, the increase in the intake resistance is reduced. The projection amount h is set to be a value that reduces the intake resistance increased by the projecting members 91 as much as possible and reduces the velocity of the swirl flow. The thickness d of each of the projecting members 91 is set to be a value that reduces the intake resistance increased by the projecting members 91 as much as possible and prevents the projecting members from being deformed even if the swirl flow collides with the projecting members 91.

Thus, in this embodiment, the plurality of (four) projecting members 91 provided on the inner wall surface of the specific portion 90 can reduce the velocity of the swirl flow. This can reduce the sound radiation emitted from the surface of the upstream intake pipe 36 without attaching a sound insulating material or a damping material to the surface of the upstream intake pipe 36.

Further, each of the projecting members 91 is provided in such a position that does not hinder the flow of the intake air passing through the specific portion 90 toward the compressor 21 when the relief valve 78 is fully closed (a position that allows the virtual central plane to extend in the passage length direction of the specific portion 90 and in the radial direction of the specific portion 90). This can reduce the intake resistance increased by the projecting members 91. Moreover, since the central portion of the specific portion 90 has no projecting member 91, the intake resistance increased by the projecting members 91 can be reduced as much as possible.

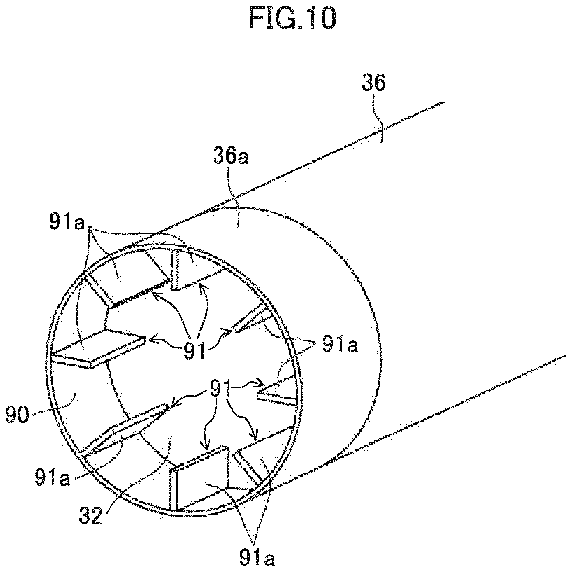

FIG. 10 shows projecting members 91 according to a first variation. In this first variation, eight projecting members 91 are respectively provided at eight portions of the inner wall surface of the specific portion 90 (a portion of the upstream intake passage 32 near the downstream end of the upstream intake passage 32) in the circumferential direction of the inner wall surface. The eight portions are uniformly spaced apart in the circumferential direction of the inner wall surface in FIG 10. Other configurations are the same as those of the foregoing embodiment. Also in this first variation, the same advantages as those of the foregoing embodiment can be obtained. Note that increasing the number of the projecting members 91 more effectively reduces the velocity of the swirl flow.

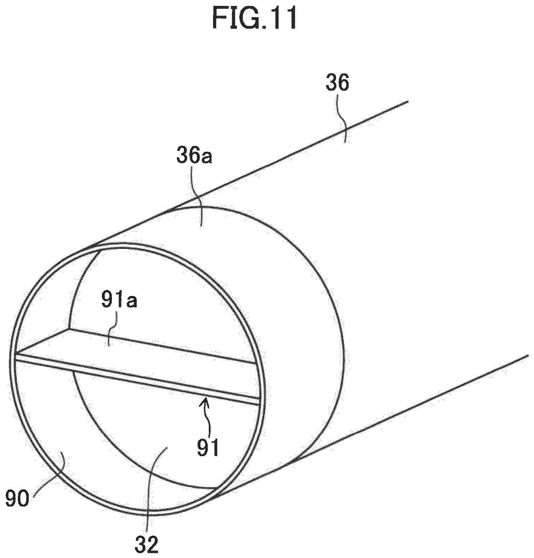

FIG 11 shows projecting members 91 according to a second variation. In this second variation, the two projecting members 91 are respectively provided at two portions of the inner wall surface of the specific portion 90 (a portion of the upstream intake passage 32 near the downstream end of the upstream intake passage 32) facing each other in the radial direction of the inner wall surface. In addition, in the second variation, the projection amount h of each of the two projecting members 91 is equal to half the inner diameter D of the passage in the specific portion 90. In other words, the two projecting members 91 project to the center of the specific portion 90, and are joined together at the center. Thus, in the second variation, it can be said that one projecting member 91 extending across the entire diameter of the specific portion 90 is provided on one portion of the inner wall surface of the specific portion 90. Other configurations are the same as those of the foregoing embodiment.

Even if the two projecting members 91 project to the center of the specific portion 90 as described above, the increase in the intake resistance can be reduced by the position of each projecting member 91. Further, even if the number of the projecting members 91 is two, the velocity of the swirl flow can be reduced.

Note that the number of the projecting members 91 may be one. Further, the shape of the projecting member 91 does not need to be in the shape of the flat plate as described above, and any shape may be used as long as the velocity of the swirl flow can be reduced. In a preferred embodiment, to reduce the velocity of the swirl flow while reducing the increase in the intake resistance as much as possible, the projecting member 91 is in the shape of a flat plate, and the flat plate-like projecting member 91 is provided in the position described above.

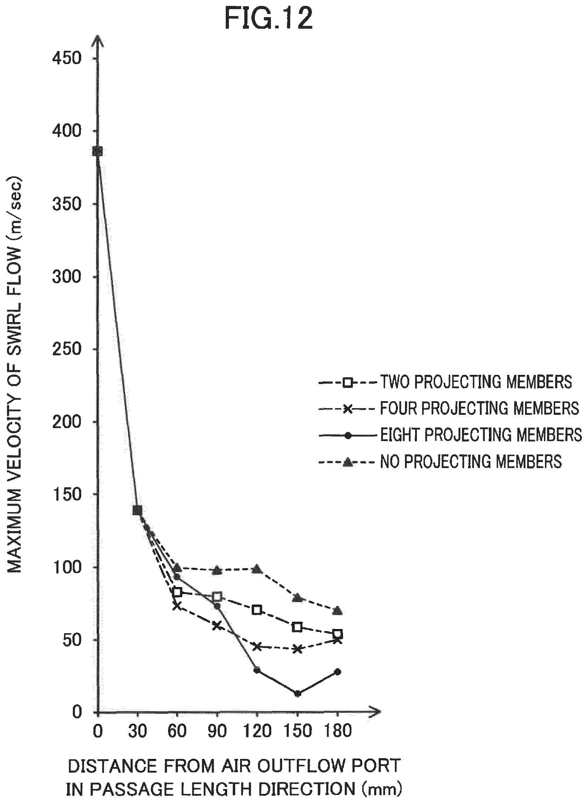

FIG. 12 shows the result of examination of the relation between a distance from the air outflow port 72a in a passage length direction and a maximum velocity of the swirl flow in each of a situation where the specific portion 90 includes two projecting members 91, a situation where the specific portion 90 includes four projecting members 91, a situation where the specific portion 90 includes eight projecting members 91, and a situation where the specific portion 90 includes no projecting member 91.

The four projecting members 91 provided in the situation where the specific portion 90 includes the four projecting members 91 have the same configuration as the projecting members of the foregoing embodiment, and are 60 mm away from the air outflow port 72a in the passage length direction.

The eight projecting members 91 provided in the situation where the specific portion 90 includes the eight projecting members 91 have the same configuration as the projecting members of the first variation, and are 90 mm away from the air outflow port 72a in the passage length direction.

The two projecting members 91 provided in the situation where the specific portion 90 includes the two projecting members 91 have the same configuration as the projecting members of the second variation (projecting to the center of the specific portion 90 and are joined together at the center), and are 60 mm away from the air outflow port 72a in the passage length direction.

FIG. 12 shows that, if the four projecting members 91 are provided and if the two projecting members 91 are provided, the maximum velocity of the swirl flow is lower at a position at which the above-described distance is 60 mm or more (a position closer to the air inlet 31 than the position where the projecting members 91 are provided) than if no projecting member 91 is provided. In addition, the provision of the four projecting members 91 allows the maximum velocity of the swirl flow to be lower than the provision of the two projecting members 91.

The provision of the eight projecting members 91 allows the maximum velocity of the swirl flow to be lower at a position at which the above-described distance is 90 mm or more (a position closer to the air intake port 31 than the projecting members 91) than if no projecting member 91 is provided. In addition, the provision of the eight projecting members 91 allows the maximum velocity of the swirl flow to be lower than the provision of the four projecting members 91 and the provision of the two projecting members 91. As described above, as the number of the projecting members 91 increases, the maximum velocity of the swirl flow can further decrease.

The present invention is not limited to the embodiments described above. Any change can be made within the scope of the claims as appropriate.

The foregoing embodiments are merely preferred examples in nature, and the scope of the present invention should not be interpreted in a limited manner. The scope of the present invention is defined by the appended claims, and all variations and modifications belonging to a range equivalent to the range of the claims are within the scope of the present invention.

### INDUSTRIAL APPLICABILITY

The present invention is useful for a turbocharger-equipped engine intake passage structure including an air relief passage provided in an intake passage including a compressor of the turbocharger. The air relief passage is used to return a portion of intake air supercharged by the compressor to a portion of the intake passage upstream of the compressor.

### DESCRIPTION OF REFERENCE CHARACTERS

- 1: Turbocharger-equipped Engine
- 20: Turbocharger
- 21: Compressor
- 21a: Compressor Case
- 21d: Drive Unit Attachment Portion
- 30: Intake Passage
- 32: Upstream Intake Passage
- 33: Downstream Intake Passage
- 47: Throttle Valve
- 71: Supercharging Passage
- 71a: Upstream Portion of Supercharging Passage Upstream of Compressor
- 71b: Downstream Portion of Supercharging Passage Downstream of Compressor
- 72: Air Relief Passage
- 72a: Air Outflow Port of Air Relief Passage
- 90: Specific Portion
- 91: Projecting Member
- 91a: Flat Surface

## Claims

1. An intake passage structure for a turbocharger-equipped engine, the intake passage structure comprising:
a compressor of the turbocharger housed in a compressor case;
an upstream intake passage supplying intake air into the compressor case;
a downstream intake passage supplying the intake air supplied into the compressor case and supercharged by the compressor to an intake port of the engine; and
a throttle valve disposed in the downstream intake passage, wherein
a supercharging passage and an air relief passage are provided in the compressor case, the supercharging passage including the compressor and connecting the upstream intake passage and the downstream intake passage together, the air relief passage connecting an upstream portion of the supercharging passage upstream of the compressor and a downstream portion of the supercharging passage downstream of the compressor together without passing through the compressor, and returning a portion of the intake air supercharged by the compressor to the upstream portion of the supercharging passage upstream of the compressor,
the air relief passage has an air outflow port formed through an inner wall surface of the upstream portion of the supercharging passage upstream of the compressor, and
at least one projecting member is provided on a portion of an inner wall surface of a specific portion in a circumferential direction of the inner wall surface, the at least one projecting member projecting radially inward of the specific portion, the specific portion ranging from a downstream portion of the upstream intake passage to a portion of the supercharging passage upstream of the air outflow port.

2. The intake passage structure of claim 1, wherein
the specific portion is a portion of the supercharging passage upstream of, and near, the air outflow port, or a portion of the upstream intake passage near a downstream end of the upstream intake passage.

3. The intake passage structure of claim 1 or 2, wherein
the at least one projecting member is in a shape of a flat plate having two flat surfaces facing each other in a thickness direction of the projecting member, and
a virtual central plane passing midway between the two flat surfaces of the at least one projecting member extends in a passage length direction of the specific portion and in a radial direction of the specific portion.

4. The intake passage structure of any one of claims 1 to 3, wherein
the at least one projecting member includes a plurality of projecting members respectively provided at a plurality of portions of the inner wall surface of the specific portion in the circumferential direction of the inner wall surface, and
the plurality of projecting members are in substantially the same position in the passage length direction of the specific portion.

5. The intake passage structure of any one of claims 1 to 4, wherein
a projection amount of the at least one projecting member is smaller than half an inner diameter of a passage in the specific portion.
